(19)

Europäisches
Patentamt
European
Patent Office
Office européen
des brevets

(11) **EP 3 144 645 B1**

(12) **EUROPEAN PATENT SPECIFICATION**

(45) Date of publication and mention
of the grant of the patent:
**07.11.2018 Bulletin 2018/45**

(51) Int Cl.:
*G01F 25/00* *(2006.01)*      *G01F 15/02* *(2006.01)*

(21) Application number: **15461559.5**

(22) Date of filing: **18.09.2015**

(54) **METHOD OF GAS STATE RECALCULATION AND APPARATUS THEREFORE**

VERFAHREN ZUR GASZUSTANDSNEUBERECHNUNG UND VORRICHTUNG DAFÜR

PROCÉDÉ DE RECALCUL D'ÉTAT DE GAZ ET APPAREIL CORRESPONDANT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**22.03.2017 Bulletin 2017/12**

(73) Proprietor: **PLUM spólka z ograniczona
odpowiedzialnoscia
Ignatki 16-001 Kleosin (PL)**

(72) Inventors:
• **Klos, Jacek
15-523 Grabowka (PL)**

• **Marek, Lapinski
15-714 Bialystok (PL)**
• **Grzegorz, Baczek
15-660 Bialystok (PL)**

(74) Representative: **Bury, Marek
Bury & Bury
Ul. Przyczolkowa 124
02-968 Warszawa (PL)**

(56) References cited:
**CA-C- 1 301 332      JP-A- 2000 018 993
JP-A- 2004 151 013    US-A1- 2014 303 909**

## Description

## Technical Field

The present invention relates to an apparatus and a method for gas state recalculation. More particularly, the present invention relates to an apparatus and a method for gas state recalculation with protection against corruption of results due to errors in electronic instrumentation.

## Background

Gas volume correctors are devices known in the state of the art. They are typically used in the field of gas measurements. An apparatus for gas state recalculation cooperates with a gas meter. The gas meter itself measures only a gas flow in predefined measurement conditions. Such measurement is not objective, because the volume and other parameters defining the state of the flowing gas depend on the measurement conditions. The basis for clearing between suppliers and recipients of gas usually is the volume of the supplied gas, measured in contractual and invariable reference conditions, thus in the so-called base conditions. In consequence, the most common apparatuses for gas state recalculation are gas volume correctors, receiving the value of a parameter from the gas meter, recalculating it to gas volume in base conditions and adding to the state of the meter counting the volume of the flowing gas.

Determination of the volume of supplied gas in base conditions is a complicated task, because the gas supply process is distributed in time and the conditions in which the gas meter actually performs the measurement vary during this process.

Typically the volume of gas in measurement conditions is counted by means of a dedicated gas meter or flow meter.

Dedicated gas meters include mechanical gas meters, including turbine and rotary meters, electronic meters, including ultrasonic and Coriolis meters. The counting of volume comes down to counting pulses from a gas meter.

In case of a flow meter, volume counting is carried out according to the principle of measurement signal integration. The measurement signal can be an electric current signal, representing a measured pressure difference on the sensing element. This principle applies to orifice meters and to Annubar flow meters.

Regardless of whether a gas meter or a flow meter is used, the result of measurement always corresponds to the measurement conditions, and not to the base conditions.

Accordingly, gas meters are provided with apparatuses for gas state recalculation, which are used to determine the volume in base conditions based on results of volume measurement in actual conditions and results of measurements of physical quantities characterising these conditions. It is a task which is computationally complex and prone to numeric errors due to a significant number of operations required to compute the real gas state equations.

A system for measuring a medium flowing in a continuous process is known from the U.S. Patent Application US 2009/0013798. The medium can be a gas. The measurement system is provided with a temperature sensor, a pressure sensor and a flow meter sensitive to a defined flow parameter, such as e.g. volumetric flow or mass flow. The measurement system is provided with an electronic apparatus for gas state recalculation enabling to derive the result of measurement in base condition, taking into account the compressibility factor determined by means of algorithms specified in standards AGA 8-G1, AGA8-G2, AGA NX-19, SGERG-88 and other ones. These are relatively simple methods, not requiring powerful and complex computational units or large amounts of memory. Therefore these methods are less prone to numeric errors. Unfortunately, they are not very accurate. Their range of application is also limited.

There are known algorithms providing a more accurate recalculation of measurement result to volume in base conditions, having a broader range of application. These include e.g. AGA8-92DC. Unfortunately, the computational complexity of this method imposes a hundred times more rigorous requirement for recalculating apparatuses. This results in a significant increase of the risk of occurrence of numerical and mathematical errors. Such risk is unacceptable for industrial recalculating apparatuses. Particularly dangerous are transient errors, leading to erroneous results, which can be readily interpreted, stored or transmitted as correct ones.

Some of currently used recalculating apparatuses are sometimes able of detecting an occurrence of a rough error of parameter values only, employing estimation of specific expected values, wherein this estimation is based only on constructional features of a specific measurement system, such as gas meter's maximal throughput. Such measurement systems include e.g. MacMAT III E, MacMAT IIA MID, MacBAT II. The errors detected in this way cannot be properly corrected and usually are transmitted in an emergency mode to subsequent analysis and correction by the instrument's service staff. Canadian Patent publication CA 1301332C discloses a method for measuring gas flow, flow temperature and flow pressure and for determining with a high degree of accuracy the supercompressibility factor, from which a value of gas volume at base conditions of temperature and pressure may be calculated. In order to ensure the integrity of the calculation variables as stored within the RAM, a CHECK SUM subroutine step is executed, whereby the coefficients and constants as stored within the RAM are again summed and the sum compared with the previous sum as stored in the known location.

The object of the invention is to provide an apparatus and a method for recalculation of measurement result into the gas volume in base conditions by means of accurate and complex algorithms, being insensitive to typical sources of recalculation errors in electronic circuitry.

## Summary

The object of the invention is achieved by provision of a method for recalculation of a result of gas state measurement in measurement conditions to the result of gas state measurement in base conditions, by means of a recalculating apparatus configured to cooperate with a gas meter. The recalculating apparatus is provided with a central unit, connected to a non-volatile memory and a volatile memory. In the non-volatile memory there is stored a program implementing at least an algorithm of gas state recalculation. The central unit of the recalculating apparatus is configured to receive at least data from a temperature sensor, a pressure sensor and from a gas meter, storing them in the volatile memory and to perform the gas state recalculation step. According to the method of the invention, checksums for data received from external sensors and from the gas meter are calculated and stored right after obtaining them during operation of the recalculating apparatus. Each time before executing the gas state recalculation step the following are performed:

> step of validation of proper operation of gas state recalculation algorithm, by performing the algorithm for the test data and comparing the obtained result with the known correct result, and
> step of validation of correctness of current data, by comparing their checksum computed on receiving them with the one computed just before performing the recalculating operation.

If none of these step provides a negative result, the gas state recalculation step is performed for the measurement data received from the temperature sensor, pressure sensor and the gas meter.

Such procedure minimizes the risk of adding an incorrectly recalculated increment of flowing gas volume to the counter counting the total volume. The step of validation of operation of recalculation algorithm allows detecting malfunctions leading to recalculation errors, and the step of validation of current data allows detecting temporary corruption of the values essential for the result.

Preferably, before commencing cyclic recalculation, a checksum of at least one program code block is calculated and this checksum is stored in a checksum table, while before carrying out the step of gas state recalculation an additional step of program code correctness validation by verification of checksum of at least one program code block against the checksum table stored in memory. The step of recalculation is carried out only if the result of verification in the step of code validation is positive.

The step of code validation marginalises the occurence of false results due to corruption of commands, physical constants or gas model parameters stored in non-volatile memory. It also provides the ability to detect a situation, when the cause of meter's malfunction lies in the memory, and the ability of swift repair, in consequence.

Preferably, before commencing cyclic recalculation the program code is copied into volatile memory, from which it is executed, and furthermore a checksum for the checksum table is computed as well, and stored in a certain field in memory. Next, each time during the step of code validation, additionally a validating test of checksum table is performed. This test involves computing a checksum of the checksum table stored in volatile memory and comparing with the contents of the field in memory. In this way corruptions of volatile memory in the region of the checksum table can be detected. Such corruptions can cause improperly negative results of the validating and testing steps themselves.

If the result of the comparison states, that the computed checksum of the checksum table stored in volatile memory does not match the contents of the field, then the checksum table is filled anew with checksums computed based on the contents of the program code blocks stored in the non-volatile memory. The newly created checksum table is stored in the volatile memory and a new checksum value for the checksum table is derived. This value is stored in the field of memory as well. Next, validating test of the checksum table is carried out again and if the table turns out to be correct, i.e. when the computed checksum value matches the value read from the field of memory, the step of code validation is continued, while otherwise the recalculating apparatus is reseted. A corruption in the region of the checksum table affects the result of the step of code validation, but does not affect the correctness of performing the step of recalculation. Thus, an attempt to correct an error of the checksum table can be undertaken without restarting the recalculating apparatus and thereby the interrupt of its operation can be reduced. Splitting the program code into blocks significantly reduces the repair timer. This makes it easier to find the location in memory where a corruption has occurred and allows to rewrite only the block damaged because of this corruption.

Preferably, before carrying out the step of gas state recalculation, additionally the step of validating test of computing unit operation is performed, wherein a repeatable set of pseudorandom numbers is generated, the numbers constituting the arguments of operations performed by this computing unit, and next the repeatability of the result of at least one operation performed by this unit on the generated set of numbers is tested.

Preferably, in the step of algorithm operation validation there are used cyclically at least two test datasets, stored previously in volatile memory and used so that the steps performed in subsequent recalculation cycles are performed always for different test data.

Even more preferably, six test datasets are used, which are subsequently selected for application in the step of algorithm testing, performed in subsequent recalculation cycles. The application of six different sets makes it possible to test in a wide range of parameter variation.

Preferably, the data used for recalculation are cloned in volatile memory in its protected region, and if in this step it is determined that the data are not correct, a copy from the protected region is used.

The object of the invention is also achieved by providing an apparatus for recalculation of gas parameters configured to cooperate with a gas meter and to recalculate the readout of the gas meter in the measurement conditions into the result of measurement in base conditions. The recalculating apparatus according to the invention is provided with a central unit, connected to non-volatile memory and volatile memory. In the non-volatile memory there is stored a program implementing a gas state recalculation algorithm. The central unit is configured to receive data from a temperature sensor, a pressure sensor and a gas meter, to store them in a volatile memory and to execute the recalculating program. The code of the program stored in a memory includes a module carrying out the step of gas state recalculation for current data, and modules carrying out, respectively, the steps of validation of proper operation of the gas state recalculation algorithm, by carrying out the algorithm for test data and comparing the obtained result with the known correct result,

the steps of validation of current data correctness by deriving current checksums and comparing them with the stored ones.

The recalculating apparatus according to the invention is insensitive to transient interferences resulting in modifications of volatile memory, incorrect operation of computational units, and also numerous other errors, which may lead to an invalid result of recalculation.

Preferably, the central unit is configured to determine checksums of blocks of program code stored in non-volatile memory and to store these sums in a checksum table in memory.

Preferably, the recalculating apparatus is configured to fill anew the checksum table with checksums computed again based on the contents of the program code blocks stored in the non-volatile memory in case of determining a mismatch of the computed checksum of the checksum table stored in volatile memory and the contents of the field, to store such derived new checksum table in a volatile memory, to derive a new checksum value of the checksum table, and to store it in the field in memory, to re-check matching of the computed checksum of the checksum table to the contents of the field, and to reset itself if a mismatch occurs.

Preferably, the volatile memory is configured to accommodate a program executed by the recalculating apparatus, and the central unit preferably is configured to transfer this program from non-volatile memory to volatile memory, and to execute the program from volatile memory afterwards.

Alternatively, the central unit is configured to execute a program code from non-volatile memory.

Preferably, the recalculating apparatus has at least two test datasets stored in memory, the datasets containing reference data, including gas meter's readout, value of pressure and temperature in measurement conditions and a correct result of gas state recalculation into defined base conditions, and it is configured to load these data such that in subsequent recalculation cycles the same datasets were not loaded into the module implementing the step of validation of operation of recalculation algorithm.

Even more preferably, these are six test datasets, and the recalculating apparatus is configured to load them sequentially in subsequent recalculation cycles, for application in the step of algorithm testing.

Preferably, the computational unit is a hardware computational unit, such as a coprocessor.

Alternatively, the computational unit is the central unit itself.

Preferably, the recalculating apparatus is configured to clone the data used for recalculations in a protected region of memory.

The object of the invention is also achieved by providing a computer program product characterised by being configured to being stored in non-volatile memory of the recalculating apparatus according to the invention, and, after being loaded into volatile memory of the recalculating apparatus, to carry out the method according to the invention.

**Brief description of drawings**

The object of the invention has been depicted in embodiments shown in the drawings, wherein Fig. 1 is a schematic block diagram of a recalculating apparatus according to the invention, Fig. 2 is a flowchart of a method according to the invention, and Fig. 3 shows schematically a sequence of determining and storing checksums in a method according to the invention.

**Description of the embodiments**

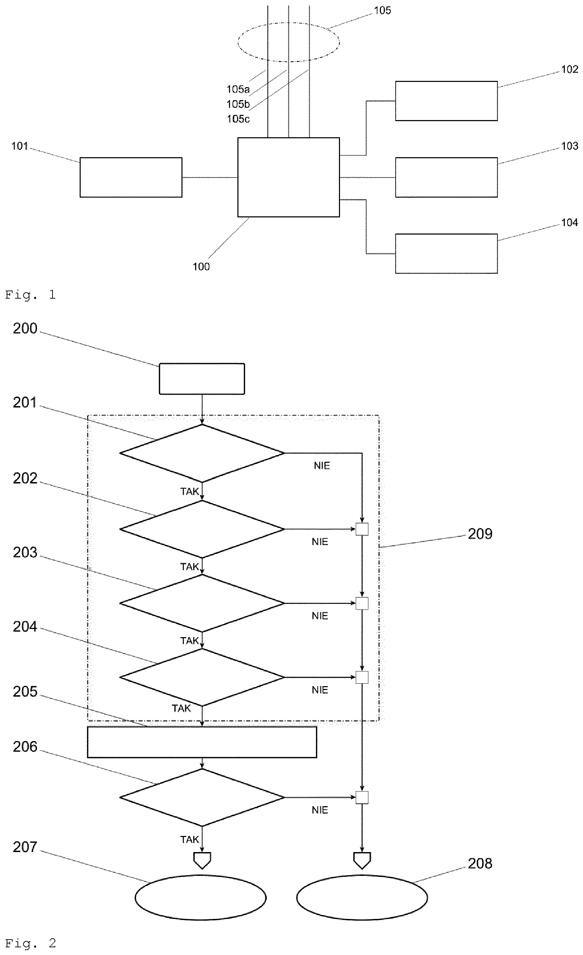

A general block diagram of a recalculating apparatus according to the invention has been shown in Fig. 1. The recalculating apparatus includes a central unit 100, non-volatile memory 101 connected thereto, e.g. flash memory, and volatile memory 102 connected to the central unit, e.g. RAM memory, a hardware computational unit 103 and additional interfacing devices 104, providing indications of operational state of the recalculating apparatus to the user, e.g. diodes or displays, or a data interface, enabling to display the operational state of the recalculating apparatus on a portable device or a connected computer.

The first embodiment of the recalculating apparatus uses as the central unit 100 the microcontroller LPC3250 produced by NXP Semiconductors, provided with one hardware computational unit 103, constituted by integrated therewith coprocessor with double, eight-byte precision. For non-volatile memory 101 there is used the module S29GL256S90FHI01 having 256Mbit capacity, and for volatile RAM memory 102 the module MT48H16M32LFB5-75IT:CMICRON SDRAM, having 256Mbit capacity. With this configuration the recalculating apparatus according to the invention is capable of carrying out the method according to the invention, described below, at least four times per second.

In the second embodiment of the recalculating apparatus, as the central unit there is used MK70FN1M0VMJ15 32-bit K70 ARM Cortex M4, provided with integrated non-volatile flash memory 101 having 1024 kB capacity and volatile RAM memory 102 having 128 kB capacity.

The recalculating apparatus in the first embodiment operates executing a program from volatile RAM memory 102, while the recalculating apparatus in the second embodiment operates executing a program from non-volatile memory, and stores only measurement signals in volatile RAM memory.

The method according to the invention is applicable for both embodiments of the recalculating apparatus, although some specific options are justified only if the program is executed from RAM memory.

A set of signals 105 is being fed to the recalculating apparatus regardless of the embodiment. This set includes a signal 105a of a gas meter and signals characterising conditions of measurements, e.g. a signal from a thermometer 105b and a signal from a manometer 105c.

During the whole operation the recalculating apparatus counts the volume corresponding to base conditions in the main meter. From the moment of the first use the readout of the main counter can only increase, correspondingly to calculated gas flows, according to the equation:

$$Vb_n = Vb_p + dV_b,$$

where $Vb_n$ is the new value of meter Vb, $Vb_p$ denotes the previous value of meter Vb, while dVb denotes the instantaneous increment of meter $V_b$;

The value of the meter can be reset to zero - if, due to gas flow measurement, a planned, contractual maximal value is reached, then a so-called rewinding of the meter occurs.

The main meter, used for gas volume counting in a recalculating apparatus, has its representation in volatile RAM memory. In RAM memory there is also represented the instantaneous increment of the main meter value.

Operations on the main meter usually are performed as floating point operations, on eight-byte numbers. This corresponds to the range of values from $10^{-308}$ to $10^{308}$. Corruption of one bit in volatile RAM memory 102 is enough for a very significant change of the value of the number stored therein. In the extreme case it is a change by many orders of magnitude, in other cases these may reach insignificant percent.

Because the state of a meter is accumulating, some corruptions, if not detected in time, can amass for a longer time, generating significant, but undetectable errors. The more RAM memory the recalculating apparatus has to use, the greater is the risk of these errors, and thus it increases with the complexity of recalculating algorithms.

Volatile RAM memory is vulnerable to corruption due to transient errors.

The typical causes of transient errors in electronic circuits include electromagnetic interference, internal and external, and ionizing radiation from trace amounts of radioactive elements in devices or constituting a part of cosmic radiation. Accordingly, a corruption of the meter value or the value of its instantaneous increments can occur, wherein these corruptions can be hardly predicted, and essentially cannot be avoided.

A fundamental problem solved by software in a recalculating apparatus is to determine the value of conversion coefficient C, used for recalculating the measured instantaneous gas volume increments in measurement conditions into the instantaneous volume increments in base conditions, according to the equation:

$$dVb = C \cdot dVm$$

where dVb denoted the value of the instantaneous volume increment in base conditions, and dVm is the value of instantaneous volume increment in measurement conditions.

A recalculating apparatus receives a signal representing the result of pressure measurement 105c and a signal 105b representing the result of gas temperature measurement. These are the data enabling to recalculate the counted gas volume from measurement conditions to the base conditions. The term "base conditions" includes a set of normalised pressure and temperature values, for which the volume in base conditions is computed. Typically, the base temperature is Tb=273.15 K or Tb=288.15 K, or Tb=293.15 K, and the base pressure pb=101.325 kPa.

If the gas subjected to measurement were not a real gas, but had the properties of an ideal gas, then the measurement of pressure and temperature would be sufficient for calculating the conversion coefficient. However, because gases used in energetics do not have the properties allowing to use the ideal gas model with sufficient accuracy, the operations performed by a recalculating apparatus take into account also deviations from the ideal gas equation. These deviations are compensated by computing instantaneous values of compressibility factors. This is performed by means of a selected computational algorithm, with taking the value of measured pressure and temperature into account, according to the equation:

$$Z = f(p, T),$$

where Z denotes the compressibility factor, f is a certain function, while p and T are the value of temperature and pressure, respectively, characterising the volume measurement conditions. A definition of function f can be found e.g. in standards EN-ISO 12213-2 and EN-ISO 12213-3. Eventually, the coefficient C is determined by means of the equation:

$$C = \frac{Tb}{pb} \times \frac{p}{T} \times \frac{Zb}{Z}$$

where Tb, pb, and Zb denote the temperature, pressure and compressibility factor, respectively, corresponding to the base conditions, while T, p and Z denote the temperature, pressure and compressibility factor, respectively, corresponding to the measurement conditions.

Computing the compressibility factors is one of the main mathematical, numerical and implementation problems in gas volume correctors.

In the literature there are available numerous papers and standards describing various methods of computing compressibility factors. Individual methods differ among themselves with the extent of complication - enabling the computation of values of compressibility factors with different accuracy and based on different sets of parameters. Commonly used are e.g. methods SGERG-88 and AGA-NX-19, AGA8-G1, and AGA8-G2. These methods are relatively simple, but they have a more narrow allowed range of gas pressure and temperature for which they can be applied. Other methods, e.g. AGA8-92DC, can be used in wider ranges of gas pressure and temperature, and provide a higher accuracy of calculations, but are significantly more complex - leading to a greater complication of mathematical calculations necessary to be performed in a recalculating apparatus. For a comparison, the time to determine a compressibility factor by an accurate method AGA8-92DC is ca. 100 times longer than for method SGERG-88.

A program of a recalculating apparatus according to the invention is stored in non-volatile flash memory. A disadvantage of this memory is a relatively long data access time. This means that a processor wanting to retrieve data from a given memory cell specifies an address, from which it can read the data on the data bus after time necessary to output it. However, this time is so long, that executing commands would take less time than fetching them if a program executed by the processor was read on an ongoing basis from non-volatile flash memory 101. Therefore, in processors clocked at a rate exceeding the possibility of reading out non-volatile flash memory 101, a program is copied to volatile RAM memory 102 and it is executed from this memory.

A disadvantage of executing a program from the volatile RAM memory 102 is a high risk of program code corruption. Both internal - an error in the program resulting in writing to the region of memory occupied by the program, as well as external - caused by transient errors due to power supply fluctuations, electric and electromagnetic interference. A modification of one bit of machine code can have a very significant impact on program execution. A modification of a bit in jump instruction can cause a jump to a completely different location in the program, or event outside of the program, what will result in device lockup or restart. For this reason an algorithm of verification and repair has been introduced for program code located in volatile RAM memory 102.

According to the invention, the correctness of operation of the main meter and significant auxiliary meters and parameters is monitored during the whole recalculation process. These parameters are subject to control, starting from the source of acquisition of information about gas flow in measurement conditions, through monitoring the correctness of the measured pressure and temperature values, and testing the correctness of the programmed gas composition.

In an embodiment of the method according to the invention, in parallel to recalculation there are performed validating tests of the operation of the whole computational system, including both validating tests of hardware and software operation. Detection of any failure is automatically analysed and, depending on the nature of the detected problem - repair operations are undertaken automatically, in order to provide a safe, continuous operation of the apparatus. As the result, the recalculation process is divided in repeated cycles of recalculation of volume increment value starting with steps of validation and verification. The recalculated volume increment is added to the readout of the meter.

In Fig. 2 there is presented a flowchart of a single recalculation cycle in the method of recalculation according to the invention. The cycle starts with an initial step 200, wherein the data obtained from signals 105a, 105b and 105c are stored in volatile memory 102, their checksums are computed and also stored in volatile memory, and additionally replicas of the data obtained from these signals and the state of the main meter are copied to a protected region of volatile memory 102. Next, in steps 201, 202, 203 and 204 a verification of operation of the recalculating apparatus is performed. The protected region is not blanked on restart and is covered by a checksum and control procedures.

In step 201 of program code validation a comparison of the contents of volatile RAM memory 102 to the contents of non-volatile memory 101 is performed. Thereby, it is verified whether the recalculating apparatus executes an uncorrupted program.

In step 202 of validation of operation of the computational unit, in the recalculating apparatus according to the first embodiment the correctness of coprocessor operation is tested, the coprocessor constituting the computational unit 103. In this embodiment it is an arithmetic coprocessor integrated in the microcontroller constituting the central unit 100. In the second embodiment the function of the computational unit is implemented in the central unit 100 itself. Accordingly, in the method implemented with the use of the recalculating apparatus according to the second embodiment, the central unit 100 itself is subjected to tests. This solution is less efficient, regarding the speed of computation, but can be more energy efficient.

In step 203 of validation of algorithm operation the whole volume recalculation algorithm is carried out for test data and compared with the reference result stored in non-volatile memory 101. If the result of the recalculation is in agreement with the reference result it can be stated that both hardware used for recalculation and software, where the algorithm is stored, are correct.

In step 204 of current data validation the correctness of current data received from gas meter and sensors is tested.

Implementation of step 203 of validation of algorithm operation and 204 of current data validation allows to detect a significant majority of corruptions. The step 201 of program code validation provides the capability of repairing the corruptions resulting from instantaneous corruptions of memory values, and the step 202 allows to identify a problem in the unit performing computations itself, i.e. in the central unit 100 and/or the hardware computational unit 103.

A successful carrying out of the step 201 of program code validation, the step 202 of validation of operation of the computational unit, the step 203 of validation of algorithm operation, and the step 204 of current data validation allows to reduce to minimum the risk of occurrence of an error, and to perform a true recalculation of current data to the result of measurement in base conditions in the step 205 of recalculation.

In step 206 of range verification it is tested if data received from sensors and the result fit within the expected range. If yes, then it is marked as correct in step 207. This way the fundamental requirements concerning the operation of recalculating apparatuses, described in appropriate standards, are implemented, however, essentially implementation of steps 203 and 204, and particularly, of the whole complete set of 201, 202, 203 and 204, provides sufficient protection.

A negative result in the step 201 of code validation, in the step 202 of validating test of computational unit operation, the step 203 of validation of algorithm operation, the step 204 of current data validation, or the step 206 of range verification denotes, that the result of calculations is not qualified as correct.

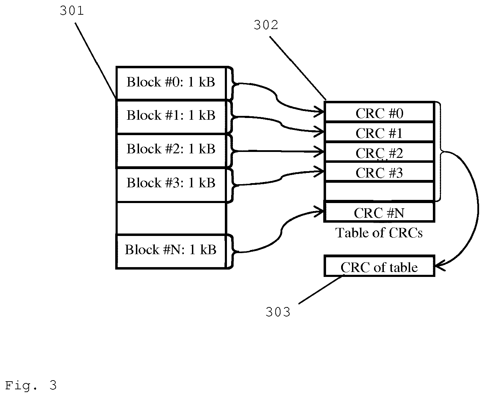

For carrying out the step 201 of program code validation a separate software module of recalculating apparatus is responsible. In the present embodiment there will be described in detail an implementation of step 201 with the use of a recalculating apparatus in which the program code is copied to volatile memory 102 and executed from this memory, i.e. the recalculating apparatus according to the first embodiment. Before commencing recalculation, during initialization, the program code image 301, stored in non-volatile memory 101, is split into blocks of constant size, 1 kB each. For each block of program 301 a CRC32 checksum is computed and stored in the checksum table 302 located in RAM memory 102. Because the checksum table 302 is also located in RAM memory 102, and can become damaged itself, a checksum of the table is additionally computed and stored with the table in a field 303 in memory, as shown in Fig. 3. Thereby, a dual protection is provided. After this operation the program code is loaded into volatile RAM memory 102, from which it is read and executed by the central unit 100.

In the present embodiment blocks of 1 kB size have proven themselves, however it is to be expected that with the increase of operating speed of memory and the processor the optimal block size will increase. In particular cases it can be justified to treat the whole code as one block.

During the program operation a new thread with the highest priority is created. During initialization of this thread there are created the tables for each distinct memory region containing program code. The high priority of the thread precludes an interruption of this operation by other threads of the program, still allowing the execution of processor interrupts. After completing the initialization the thread switches its priority to the lowest possible. From this moment the thread cyclically, by performing the step 201 of program code validation, computes the checksum of blocks of program located in RAM memory and compares it with the checksum stored in the table. After examination of the checksum of all the blocks a checksum of the table is also examined. It is done in the time when the processor is not busy with other tasks.

In case of detecting a checksum mismatch error the algorithm first examines the table checksum to verify that the cause of the error is not a damage of the table, and in the case of correct table checksum, an attempt to restore the program block is undertaken, by repeating the copying from non-volatile memory 101 to volatile RAM memory 102. Next, it recomputes the checksum of the copied block to verify the correctness of the newly copied code. In case of detecting an error and it successful repair, i.e. when the recomputed checksum is correct, a service counter is incremented. This way the number of failures is counted, which after exceeding a maximal value indicates the necessity of volatile RAM memory 102 replacement. If the recomputed checksum does not match the checksum of the original block in non-volatile flash memory 101, it means that the repair of the error was unsuccessful. Then the apparatus is restarted.

In case of detection of table checksum error, i.e. when the computed table checksum does not match the stored checksum of the table, the table is restored. If the error is beyond repair, another service counter is incremented, main counters and parameters are secured, afterwards the apparatus is restarted. In case of destroying the contents of volatile memory 102 the main counter state is read from non-volatile flash memory 101, in which it is stored periodically.

Also for carrying out the step 202 of the validation of proper operation of computational unit a separate module of recalculating apparatus is responsible. The tests include performing a defined number of times the same operations on pseudorandom numbers, generated based on a defined value initializing a pseudorandom algorithm, what means that with every test repetition the algorithm will generate the same pseudorandom numbers. The operations are performed a defined number of times and their result is summed and stored afterwards, and the test is repeated. The stored result is compared with the result of new test iteration. 100 such operations are performed, and afterwards the algorithm passes to performing a test for the next arithmetic operation. In case of detecting a difference between subsequent iterations, the test is interrupted and an error message is returned. The increment for the current measurement cycle is stored in a failure counter, and in the next one the tests are repeated. This way the recalculating apparatus is insensitive to transient interference.

These tests are performed before each execution of the main algorithm, and when a test returns an error, the result of a given algorithm iteration is marked as a result with a mathematical error and repair actions are undertaken, i.e. validation of program image in volatile RAM memory 102, restoration of the image if an error has been detected and further restarting the task performing computations in the operating system.

The correctness of operation of computational algorithms is tested in step 203 of validation of algorithm operation, by performing additional, redundant computations for a known set of input quantities and awaiting the expected result of algorithm computations. The confirmation that the obtained and expected results are in agreement proves that the algorithm itself operates correctly.

Before each calling of the operational execution of the algorithm of determining the compressibility factor a function computing the compressibility factor with known input parameters is called. The correct result is known for these parameters.

In the code of the program of the recalculating apparatus there are embedded 6 sets of input data with their corresponding results of computation obtained according to an external pattern.

In each subsequent computational cycle of the recalculating apparatus the set of input test data and the expected result change, so that to operate on different sets of numbers for each computation. The result of test computation of the compressibility factor is compared with tabulated expected results. The accordance of these results proves the full operability of the used computational algorithm.

Current variables, especially main counters, used by the recalculating apparatus, are stored redundantly, i.e. are duplicated in a special block of memory, which is protected against an unauthorised access. A CRC32 checksum is determined at the end of the block, the checksum being refreshed after each authorised modification of any parameter from the set of current data. Before each execution of the algorithm computing the volume, cyclically, integrity of current data from the base region with data from the redundant region is controlled, also controlling the correctness of redundant data by validation of the CRC32 checksum. A mismatch of the comparison detects an unauthorised access to the region of memory where current data are stored and causes undertaking further repair actions.

For carrying out all of the steps of validation and verification described above, the electronic sub-circuits of the recalculating apparatus according to the invention are designed redundantly with respect to the recalculation performed by them. This means that the central unit and computational units are faster than it is required for implementing gas state recalculation mechanisms alone. Similarly, memory of the recalculating apparatus is of a bigger size than the minimum required for such recalculations. These sub-circuits are more complex and faster than minimum required, therefore they are more prone to errors, damage and corruption. However, their redundancy is used to implement error correction procedures, and therefore, unexpectedly and paradoxically, the recalculating apparatus according to the invention is not only more precise, but also more resistant to errors than the recalculating apparatuses known in the state of the art.

The computer program product according to the invention is configured to being stored in memory of the recalculating apparatus. A solution which is significantly faster and more computationally efficient is to store it in volatile memory 102. However, in solutions slower, but more energy efficient, used e.g. in battery powered recalculating apparatuses, the speed of operation can be reduced so that flash memory access time was of less significance and then the program can be executed from non-volatile flash memory 101.

It is evident, that the embodiment of recalculating apparatus described above is intended to merely explain the essentials of the invention to those skilled in the art, through lecture of the description, and in no way limits the scope of protection defined by the claims further below. In particular, it is evident that a person skilled in the art is able to routinely modify the presented architecture of the recalculating apparatus and to replace its sub-circuits with other ones having similar functions. A person skilled in the art is also able to routinely modify the order of carried out steps of the method, such that to achieve the same or similar level of protection.

It will be apparent for those skilled in the art that the solution described herein is applicable for recalculation of any real gas parameters, not only volume, but also density, flow parameters or energetic parameters, such as calorific value.

## Claims

1. Method of recalculation of the result of a gas state measurement in measurement conditions to the result of gas state measurement in a base conditions, by means of recalculating apparatus configured to cooperate with a gas meter, provided with a central unit (100) having non-volatile memory (101) and volatile memory (102) connected thereto, wherein in non-volatile memory (101) there is stored a program implementing at least an algorithm of gas state recalculation, and the central unit is configured to receive at least data from a temperature sensor, a pressure sensor and a gas meter, to store them in the volatile memory (102) and to carry out a step (205) of gas state recalculation with the use of a computational unit (100, 103),
**characterised in that**
during operation of the recalculating apparatus there are computed
and stored checksums at least for data received from external sensors and a gas meter, immediately after their reception, and
before carrying out the step (205) of a gas state recalculation there are performed at least:

> step (203) of validation of proper operation of a gas state recalculation algorithm by performing it for test data and comparing the obtained result with the known correct result,
> step (204) of validation of a correctness of current data by comparing their checksums computed on their reception and just before carrying out the recalculating operation

and if the validation in none of these steps yields a negative result, the step (205) of gas state recalculation is carried out for measurement data received from the temperature sensor, the pressure sensor and the gas meter.

2. The method according to claim 1, **characterised in that**
a checksum of at least one block of program code (301) is
computed before commencing cyclic recalculation and this checksum is stored in a checksum table (302),
while before carrying out the step (205) of gas state recalculation there is performed additionally step (201) of program code validation, by verification of a checksum of at least one program code block against a checksum table (302) stored in memory,
and step (205) of gas state recalculation is carried out only
when the result of validation in step (201) of program code validation is positive.

3. The method according to claim 2, **characterised in that** before commencing cyclic recalculation the program code is copied to the volatile memory (102), wherefrom it is executed, and furthermore a checksum also for the checksum table (302) is computed and stored in a field (303) in memory, and next, each time in step (201) of code validation a validating test of checksum table (302) is performed, the test including computation of checksum of the checksum table (302) stored in volatile memory (102), and comparing it with the contents of the field (303) in memory, wherein if as a result of the comparison it is determined that the computed checksum of the checksum table (302) stored in volatile memory (102) does not match the contents of the field (303), then the checksum table is filled anew with checksums computed based on the contents of blocks of program code included in non-volatile memory (101), the new derived checksum table (302) is stored in volatile memory (102), and a new value of checksum of the checksum table (302) is derived and stored in the field (303) in memory, again the validating test of the checksum table is carried out afterwards and, if the table turns out to be correct, the step (201) of code validation is continued, while otherwise the recalculating apparatus is reset.

4. The method according to any of claims 1 to 3, **characterised in that** additionally a step (202) of validating test of operation of computational unit (100, 103) is performed before carrying out the step (205) of gas state recalculation, wherein a repeatable set of pseudorandom numbers is generated in the test, the numbers constituting arguments of operations performed by this computational unit (100, 103), and next the repeatability of result of at least one operation performed by this computational unit (100, 103) for the generated set of numbers is tested.

5. The method according to any of claims 1 to 4, **characterised in that** in the step (203) of validation of operation of algorithm there are used cyclically at least two test datasets, previously stored in volatile memory (102) and used such that the steps (203) carried out in subsequent recalculation cycles are always performed for different test data.

6. The method according to any of claims 1 to 5, **characterised in that** the data used for recalculation are replayed in volatile memory (102) in its protected region and if in the step (204) of validation of correctness of current data it is determined that the data are not correct, a copy of said data from the protected region is used.

7. An apparatus for recalculation of gas parameters, configured to cooperate with a gas meter and to recalculate the gas meter indication in measurement conditions to the result of measurement in base conditions, according to the method as defined in any of claims 1-6, provided with a central unit (100) having non-volatile memory (101) and volatile memory (102) connected thereto, wherein a program implementing a gas state recalculation algorithm is stored in non-volatile memory (101), and the central unit (100) is configured to receive data at least from a temperature sensor, from a pressure sensor and from a gas meter, to store them in volatile memory (102), and to carry out the step (205) of gas state recalculation with the use of a computational unit (100,103),
**characterised in that**
the program code stored in memory includes a module implementing a
step (205) of gas state recalculation and modules being run each time before gas state recalculation and carrying out, respectively:

> steps (203) of validation of proper operation of an algorithm of gas state recalculation by carrying it out for test data and comparing the obtained result with the known correct result,
> steps (204) of validation of correctness of the current data by determining current checksums and comparing them to the stored ones.

8. The apparatus for recalculation of gas parameters according to claim 7, **characterised in that** the central unit (100) is configured to determine checksums of blocks of program code stored in non-volatile memory (101), and to store these sums in checksum table (302) in memory.

9. The apparatus for recalculation of gas parameters according to claim 7 or 8, **characterised in that** volatile memory (102) is configured to store a program executed by the apparatus, while the central unit (100) is configured to transfer the program from non-volatile memory (101) to volatile memory (102), and to subsequently execute it from volatile memory (102).

10. The apparatus for recalculation of gas parameters according to claim 7 or 8, **characterised in that** the central unit (100) is configured to execute a program from non-volatile memory (102).

11. The apparatus for recalculation of gas parameters according to any of claims 7 to 10, **characterised in that** the computational unit is a hardware computational unit (103).

12. The apparatus for recalculation of gas parameters according to any of claims 7 to 10, **characterised in that** the computational unit is provided by the central unit (100).

13. The apparatus for recalculation of gas parameters according to any of claims 7 do 12, **characterised in** being configured to clone data used for recalculation in a protected region of volatile memory (102).

14. A computer program product, **characterised in that** it is configured to be stored in the memory of the apparatus for gas state recalculation as defined in any of the claims 7 to 13, and, after being loaded, to carry out the steps of the method as defined in any of the claims 1 to 6.

## Patentansprüche

1. Verfahren zur Neuberechnung des Ergebnisses einer Gaszustandsmessung unter Messbedingungen zu einem Ergebnis der Gaszustandsmessung unter Grundbedingungen mittels einer Neuberechnungseinrichtung, die dafür ausgelegt ist, mit einem Gasmesser zusammenzuwirken, die mit einer Zentraleinheit (100) versehen ist, an die ein nichtflüchtiger Speicher (101) und ein flüchtiger Speicher (102) angeschlossen sind, wobei in dem nichtflüchtigen Speicher (101) ein Programm gespeichert ist, das mindestens einen Algorithmus der Gaszustand-Neuberechnung implementiert, und die Zentraleinheit dafür ausgelegt ist, zumindest Daten von einem Temperatursensor, einem Drucksensor und einem Gasmesser zu empfangen, diese in dem flüchtigen Speicher (102) zu speichern und einen Schritt (205) der Gaszustand-Neuberechnung unter Verwendung einer Recheneinheit (100, 103) auszuführen, **dadurch gekennzeichnet, dass**
während des Betriebs der Neuberechnungseinrichtung Prüfsummen zumindest für Daten berechnet und gespeichert werden, die von externen Sensoren und einem Gasmesser empfangen werden, und zwar unmittelbar nach deren Empfang, und
vor Ausführen des Schritts (205) einer Gaszustand-Neuberechnung mindestens folgende Schritte ausgeführt werden:

> Schritt (203) der Validierung der richtigen Funktion eines Gaszustand-Neuberechnungsalgorithmus durch Ausführen von diesem an Prüfdaten und Vergleichen des erhaltenen Ergebnisses mit dem bekannten richtigen Ergebnis,
> Schritt (204) der Validierung der Richtigkeit von aktuellen Daten durch Vergleichen ihrer Prüfsummen, die bei ihrem Empfang und kurz vor Ausführung der Neuberechnungsoperation berechnet wurden,

und falls die Validierung in keinem dieser Schritte ein negatives Ergebnis ergibt, wird der Schritt (205) der Gaszustand-Neuberechnung an Messdaten durchgeführt, die von dem Temperatursensor, dem Drucksensor und dem Gasmesser empfangen werden.

2. Verfahren gemäß Anspruch 1, **dadurch gekennzeichnet, dass** eine Prüfsumme von mindestens einem Block von Programmcode (301) vor Beginn der zyklischen Neuberechnung berechnet wird und diese Prüfsumme in einer Prüfsummen-Tabelle gespeichert wird (302), während vor Ausführen des Schritts (205) der Gaszustand-Neuberechnung zusätzlich Schritt (201) der Programmcode-Validierung durch Überprüfung einer Prüfsumme von mindestens einem Programmcodeblock anhand einer im Speicher gespeicherten Prüfsummen-Tabelle (302) ausgeführt wird und Schritt (205) der Gaszustand-Neuberechnung nur durchgeführt wird, wenn das Ergebnis der Validierung in Schritt (201) der Programmcode-Validierung positiv ist.

3. Verfahren gemäß Anspruch 2, **dadurch gekennzeichnet, dass** der Programmcode vor Beginn der zyklischen Neuberechnung in den flüchtigen Speicher (102) kopiert wird, von wo aus er ausgeführt wird, und des Weiteren eine Prüfsumme auch für die Prüfsummen-Tabelle (302) berechnet und in einem Feld (303) im Speicher gespeichert wird, und als nächstes jedes Mal in Schritt (201) der Codevalidierung eine Validierungsprüfung der Prüfsummen-Tabelle (302) ausgeführt wird, wobei die Prüfung die Berechnung der Prüfsumme der Prüfsummen-Tabelle (302), die im flüchtigen Speicher (102) gespeichert ist, und den Vergleich dieser mit dem Inhalt des Felds (303) im Speicher umfasst, wobei, falls als Ergebnis des Vergleichs bestimmt wird, dass die berechnete Prüfsumme der Prüfsummen-Tabelle (302), die im flüchtigen Speicher (102) gespeichert ist, nicht zum Inhalt des Felds (303) passt, die Prüfsummen-Tabelle erneut mit Prüfsummen gefüllt wird, die basierend auf dem Inhalt von Blöcken des Programmcodes, die im nichtflüchtigen Speicher (101) enthalten sind, berechnet werden, wobei die neu hergeleitete Prüfsummen-Tabelle (302) im flüchtigen Speicher (102) gespeichert wird, und ein neuer Wert der Prüfsumme der Prüfsummen-Tabelle (302) hergeleitet und in dem Feld (303) im Speicher gespeichert wird, die Validierungsprüfung der Prüfsummen-Tabelle danach erneut durchgeführt wird und, falls sich herausstellt, dass die Tabelle richtig ist, der Schritt (201) der Codevalidierung fortgesetzt wird, während ansonsten die Neuberechnungseinrichtung zurückgesetzt wird.

4. Verfahren gemäß einem der Ansprüche 1 bis 3, **dadurch gekennzeichnet, dass** zusätzlich ein Schritt (202) der Validierungsprüfung der Funktion der Recheneinheit (100, 103) vor Ausführen des Schritts (205) der Gaszustand-Neuberechnung ausgeführt wird, wobei bei der Prüfung ein wiederholbarer Satz von Pseudozufallszahlen erzeugt wird, wobei die Zahlen Argumente von Operationen bilden, die von dieser Recheneinheit (100, 103) ausgeführt werden, und als nächstes die Wiederholbarkeit des Ergebnisses von mindestens einer Operation, die von dieser Recheneinheit (100, 103) ausgeführt wird, für den erzeugten Satz von Zahlen geprüft wird.

5. Verfahren gemäß einem der Ansprüche 1 bis 4, **dadurch gekennzeichnet, dass** im Schritt (203) der Validierung der Funktion des Algorithmus mindestens zwei Prüfdatensätze zyklisch verwendet werden, die zuvor im flüchtigen Speicher (102) gespeichert und verwendet worden sind, so dass die Schritte (203), die in anschließenden Neuberechnungszyklen ausgeführt werden, stets für verschiedene Prüfdaten ausgeführt werden.

6. Verfahren gemäß einem der Ansprüche 1 bis 5, **dadurch gekennzeichnet, dass** die Daten, die zur Neuberechnung verwendet werden, im flüchtigen Speicher (102) in seinem geschützten Bereich erneut abgespielt werden, und falls im Schritt (204) der Validierung der Richtigkeit von aktuellen Daten bestimmt wird, dass die Daten nicht richtig sind, eine Kopie der Daten aus dem geschützten Bereich verwendet wird.

7. Vorrichtung zur Neuberechnung von Gasparametern, die dafür ausgelegt ist, mit einem Gasmesser zusammenzuwirken und die Gasmesserangabe gemäß dem Verfahren, wie es in einem der Ansprüche 1-6 definiert ist, unter Messbedingungen auf das Ergebnis der Messung unter Grundbedingungen neu zu berechnen, die mit einer Zentraleinheit (100) versehen ist, an die ein nichtflüchtiger Speicher (101) und ein flüchtiger Speicher (102) angeschlossen sind, wobei ein Programm, das einen Gaszustand-Neuberechnungsalgorithmus implementiert, in einem nichtflüchtigen Speicher (101) gespeichert ist, und die Zentraleinheit (100) dafür ausgelegt ist, Daten zumindest von einem Temperatursensor, von einem Drucksensor und von einem Gasmesser zu empfangen, diese in dem flüchtigen Speicher (102) zu speichern und den Schritt (205) der Gaszustand-Neuberechnung unter Verwendung einer Recheneinheit (100, 103) auszuführen, **dadurch gekennzeichnet, dass**

der im Speicher gespeicherte Programmcode ein Modul umfasst, das einen Schritt (205) der Gaszustand-Neuberechnung implementiert, und Module jedes Mal vor der Gaszustand-Neuberechnung bzw.

dem Ausführen der folgenden Schritte ausgeführt werden:

Schritte (203) der Validierung der richtigen Funktion eines Algorithmus der Gaszustand-Neuberechnung durch Ausführen von diesem an Prüfdaten und Vergleichen des erhaltenen Ergebnisses mit dem bekannten richtigen Ergebnis,
Schritte (204) der Validierung der Richtigkeit der aktuellen Daten durch Bestimmen von aktuellen Prüfsummen und Vergleichen dieser mit den gespeicherten.

8. Vorrichtung zur Neuberechnung von Gasparametern gemäß Anspruch 7, **dadurch gekennzeichnet, dass** die Zentraleinheit (100) dafür ausgelegt ist, Prüfsummen von Blöcken von Programmcode, die in dem nichtflüchtigen Speicher (101) gespeichert sind, zu bestimmen und diese Summen in der Prüfsummen-Tabelle (302) im Speicher zu speichern.

9. Vorrichtung zur Neuberechnung von Gasparametern gemäß Anspruch 7 oder 8, **dadurch gekennzeichnet, dass** der flüchtige Speicher (102) dafür ausgelegt ist, ein von der Einrichtung ausgeführtes Programm zu speichern, während die Zentraleinheit (100) dafür ausgelegt ist, das Programm von dem nichtflüchtigen Speicher (101) in den flüchtigen Speicher (102) zu übertragen und es anschließend von dem flüchtigen Speicher (102) auszuführen.

10. Vorrichtung zur Neuberechnung von Gasparametern gemäß Anspruch 7 oder 8, **dadurch gekennzeichnet, dass** die Zentraleinheit (100) dafür ausgelegt ist, ein Programm aus dem nichtflüchtigen Speicher (102) auszuführen.

11. Vorrichtung zur Neuberechnung von Gasparametern gemäß einem der Ansprüche 7 bis 10, **dadurch gekennzeichnet, dass** die Recheneinheit eine Hardware-Recheneinheit (103) ist.

12. Vorrichtung zur Neuberechnung von Gasparametern gemäß einem der Ansprüche 7 bis 10, **dadurch gekennzeichnet, dass** die Recheneinheit durch die Zentraleinheit (100) bereitgestellt wird.

13. Vorrichtung zur Neuberechnung von Gasparametern gemäß einem der Ansprüche 7 bis 12, **dadurch gekennzeichnet, dass** sie dafür ausgelegt ist, Daten, die zur Neuberechnung verwendet werden, in einen geschützten Bereich des flüchtigen Speichers (102) zu klonen.

14. Computerprogrammprodukt, **dadurch gekennzeichnet, dass** es dafür ausgelegt ist, in dem Speicher der Vorrichtung zur Gaszustand-Neuberechnung, wie sie in einem der Patentansprüche 7 bis 13 definiert ist, gespeichert zu werden und die Schritte des Verfahrens, wie sie in einem der Patentansprüche 1 bis 6 definiert sind, auszuführen.

## Revendications

1. Procédé de recalcul du résultat d'un état d'une mesure d'un état de gaz dans des conditions de mesure pour obtenir le résultat de la mesure de l'état de gaz dans des conditions de base, au moyen d'un appareil de recalcul configuré pour coopérer avec un compteur de gaz, muni d'une unité centrale (100) possédant une mémoire non volatile (101) et une mémoire volatile (102) qui lui est reliée, dans lequel, dans la mémoire non volatile (101), est stocké un programme implémentant au moins un algorithme de recalcul d'un état de gaz et l'unité centrale est configurée pour recevoir des données au moins à partir d'un capteur de la température, d'un capteur de la pression et d'un compteur de gaz, afin de les stocker dans la mémoire volatile (102) et de mettre en oeuvre une étape (205) de recalcul d'un état de gaz en utilisant une unité de calcul (100, 103) ;
**caractérisé en ce que**
au cours de la mise en service de l'appareil de recalcul, on procède au calcul et au stockage de sommes de contrôle au moins pour des données reçues à partir de capteurs externes et d'un compteur de gaz, immédiatement après leur réception ; et avant la mise en oeuvre de l'étape (205) du recalcul d'un état de gaz, on met en oeuvre au moins :

une étape (203) de validation d'un fonctionnement adéquat d'un algorithme de recalcul d'un état de gaz par sa mise en oeuvre pour des données tests et la comparaison du résultat obtenu au résultat correct connu ;
une étape (204) de validation de l'exactitude des données en vigueur par comparaison de leurs sommes de contrôle calculées dès leur réception et juste avant la mise en oeuvre de l'opération de recalcul ; et
lorsque la validation dans l'une quelconque de ces étapes ne fournit pas un résultat négatif, l'étape (205) de recalcul de l'état de gaz est mise en oeuvre pour les données de mesure reçues à partir du capteur de température, du capteur de pression et du compteur de gaz.

2. Procédé selon la revendication 1, **caractérisé en ce que** une somme de contrôle d'au moins un bloc de code de programme (301) est calculée avant d'entamer le recalcul cyclique et cette somme de contrôle est stockée dans une table de sommes de contrôle (302) ;
tandis que, avant la mise en oeuvre de l'étape (205) du recalcul de l'état de gaz, on met en oeuvre en outre :

une étape (201) de validation de code de programme par la vérification d'une somme de contrôle d'au moins un bloc de code de programme par rapport à une table de sommes de contrôle (302) mise en mémoire ; et une étape (205) de recalcul de l'état de gaz est mise en oeuvre uniquement lorsque le résultat de la validation à l'étape (201) de validation du code de programme est positif.

3. Procédé selon la revendication 2, **caractérisé en ce que**, avant d'entamer le recalcul cyclique, le code de programme est copié dans la mémoire volatile (102), à partir de laquelle il est exécuté et, en outre, une somme de contrôle également pour la table de sommes de contrôle (302) est calculée et est stockée dans un champ (303) dans la mémoire et ensuite, à chaque fois, à l'étape (201) de validation du code, un test de validation de la table de sommes de contrôle (302) est mis en oeuvre, le test englobant le calcul des sommes de contrôle de la table de sommes de contrôle (302) stockée dans la mémoire volatile (102) et leur comparaison au contenu du champ (303) dans la mémoire ; dans lequel, si, comme résultat de la comparaison, il est déterminé que la somme de contrôle calculée de la table de sommes de contrôle (302) stockée dans la mémoire volatile (102) ne correspond pas au contenu du champ (303), la table de sommes de contrôle est remplie à nouveau avec des sommes de contrôle calculées en se basant sur le contenu de blocs de codes de programmes inclus dans la mémoire non volatile (101), la nouvelle table dérivée de sommes de contrôle (302) est stockée dans la mémoire volatile (102), et une nouvelle valeur de somme de contrôle de la table de sommes de contrôle (302) est dérivée et stockée dans le champ (303) dans la mémoire ; une nouvelle fois, le test de validation de la table de sommes de contrôle est mis en oeuvre par la suite, et si la table s'avère être correcte, l'étape (201) de validation du code se poursuit, dans le cas contraire, l'appareil de recalcul est réinitialisé.

4. Procédé selon l'une quelconque des revendications 1 à 3, **caractérisé en ce qu'**en outre, une étape (202) du test de validation de la mise en service de l'unité de calcul (100, 103) est mise en oeuvre avant la mise en oeuvre de l'étape (205) du recalcul de l'état de gaz, dans lequel un jeu reproductible de nombres pseudoaléatoires est généré dans le test, les nombres constituant des arguments d'opérations mises en oeuvre par cette unité de calcul (100, 103), et ensuite la reproductibilité du résultat d'au moins une opération mise en oeuvre par cette unité de calcul (100, 103) pour le jeu généré de nombres est testée.

5. Procédé selon l'une quelconque des revendications 1 à 4, **caractérisé en ce que**, à l'étape (203) de validation du fonctionnement de l'algorithme, on utilise de manière cyclique au moins deux jeux de données de tests, préalablement stockés dans la mémoire volatile (102), et on les utilise d'une manière telle que les étapes (203) mises en oeuvre dans des cycles de recalcul ultérieurs sont toujours mises en oeuvre pour différentes données de tests.

6. Procédé selon l'une quelconque des revendications 1 à 5, **caractérisé en ce que** les données utilisées pour le recalcul sont reproduites dans la mémoire volatile (102) dans la zone protégée de cette dernière et, si à l'étape (204) de validation de l'exactitude des données en vigueur, il est déterminé que les données ne sont pas correctes, une copie desdites données à partir de la zone protégée est utilisée.

7. Appareil pour le recalcul de paramètres de gaz, configuré pour coopérer avec un compteur de gaz et pour recalculer les indications fournies par le compteur de gaz dans des conditions de mesure pour obtenir le résultat de la mesure dans des conditions de base, conformément au procédé tel que défini dans l'une quelconque des revendications 1 à 6, équipé d'une unité centrale (100) possédant une mémoire non volatile et une mémoire volatile (102) qui lui est reliée, dans lequel, un programme implémentant au moins un algorithme de recalcul d'un état de gaz est stocké dans la mémoire non volatile (101), et l'unité centrale (100) est configurée pour recevoir des données au moins à partir d'un capteur de la température, d'un capteur de la pression et d'un compteur de gaz, afin de les stocker dans la mémoire volatile (102) et de mettre en oeuvre l'étape (205) de recalcul de l'état de gaz en utilisant une unité de calcul (100, 103) ;
**caractérisé en ce que**
le code de programme stocké dans la mémoire englobe un module mettant en oeuvre une étape (205) du recalcul de l'état de gaz et des modules étant activés à chaque fois avant le recalcul de l'état de gaz, et mettant en oeuvre respectivement :

des étapes (203) de validation du fonctionnement approprié d'un algorithme du recalcul de l'état de gaz par sa mise en oeuvre pour des données de tests et par la comparaison du résultat obtenu au résultat correct connu ; des étapes (204) de validation de l'exactitude des données en vigueur par la détermination des sommes de contrôle en vigueur et leur comparaison aux sommes de contrôle stockées.

8. Appareil pour le recalcul de paramètres de gaz selon la revendication 7, **caractérisé en ce que** l'unité centrale (100) est configurée pour déterminer des sommes de contrôle de blocs de codes de programmes stockés dans une mémoire non volatile (101) et pour stocker ces sommes dans une table de sommes de contrôle (302) dans la mémoire.

9. Appareil pour le recalcul de paramètres de gaz selon la revendication 7 ou 8, **caractérisé en ce que** la mémoire volatile (102) est configurée pour stocker un programme exécuté par l'appareil, tandis que l'unité centrale (100) est configurée pour transférer le programme de la mémoire non volatile (101) à la mémoire volatile (102) et pour l'exécuter par la suite à partir de la mémoire volatile (102).

10. Appareil pour le recalcul de paramètres de gaz selon la revendication 7 ou 8, **caractérisé en ce que** l'unité centrale (100) est configurée pour exécuter un programme à partir de la mémoire non volatile (102).

11. Appareil pour le recalcul de paramètres de gaz selon l'une quelconque des revendications 7 à 10, **caractérisé en ce que** l'unité de calcul est une unité de calcul matérielle (103).

12. Appareil pour le recalcul de paramètres de gaz selon l'une quelconque des revendications 7 à 10, **caractérisé en ce que** l'unité de calcul est fournie par l'unité centrale (100).

13. Appareil pour le recalcul de paramètres de gaz selon l'une quelconque des revendications 7 à 12, **caractérisé en ce qu'**il est configuré pour le clonage des données utilisées pour le recalcul dans une zone protégée de la mémoire volatile (102).

14. Produit de programme informatique, **caractérisé en ce qu'**il est configuré pour être stocké dans la mémoire de l'appareil pour le recalcul d'un état de gaz tel que défini dans l'une quelconque des revendications 7 à 13 et, après avoir été chargé, pour mettre en oeuvre les étapes du procédé tel que défini dans l'une quelconque des revendications 1 à 6.

101

100

105
105a
105b
105c

102

103

104

Fig. 1

200

201

202

203

204

205

206

207

208

209

NIE

NIE

NIE

NIE

NIE

TAK

TAK

TAK

TAK

TAK

TAK

Fig. 2

301

302

| Block #0: 1 kB |
| Block #1: 1 kB |
| Block #2: 1 kB |
| Block #3: 1 kB |
| |
| Block #N: 1 kB |

| CRC #0 |
| CRC #1 |
| CRC #2 |
| CRC #3 |
| CRC #N |

Table of CRCs

| CRC of table |

303

Fig. 3

**EP 3 144 645 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20090013798 A

- CA 1301332 C